# FASCICULE DE BREVET EUROPEEN

(11) **EP 3 490 840 B1**
(45) Date de publication et mention de la délivrance du brevet: **10.11.2021**
(21) Numéro de dépôt: 17751277.9
(22) Date de dépôt: 21.07.2017
(51) Int. Cl.: B60N 2/885, B60N 2/02

(54) **TÊTIÈRE OREILLER POUR SIÈGE DE CABINE D'AÉRONEF**
KISSENKOPFSTÜTZE FÜR FLUGZEUGKABINENSITZ
PILLOW HEADREST FOR AIRCRAFT CABIN SEAT

(30) Priorité: 01.08.2016 FR 1670428
(43) Date de publication de la demande: 05.06.2019
(73) Titulaire: Safran Seats, 36100 Issoudun (FR)
(72) Inventeur: KHECHINE, Mohamed, 36100 ISSOUDUN (FR); CHEBBI, Hamdi, 36100 ISSOUDUN (FR); HERMASSI, Nadia, 36100 ISSOUDUN (FR); FAKHFAKH, Wassim, 36100 ISSOUDUN (FR)
(74) Mandataire: Marconnet, Sébastien
(86) Numéro de dépôt international: PCT/EP2017/068520
(87) Numéro de publication internationale: WO 2018/024512

(56) Documents cités:
- DE-U1- 8 810 569
- FR-A1- 2 883 528
- GB-A- 2 511 530
- US-A1- 2007 273 194
- US-A1- 2012 139 309
- US-B1- 6 250 716

## Description

La présente invention porte sur une têtière notamment pour un siège de cabine d'aéronef. L'invention trouve une application particulièrement avantageuse, mais non exclusive, avec les sièges de classe économique.

De façon connue en soi, un siège d'aéronef peut comporter une têtière montée sur un dossier. Les têtières équipant les sièges de classe économique ne permettent pas aux passagers de s'endormir en calant confortablement leur tête.

En effet, si la tête du passager peut venir en appui contre des extrémités de la têtière, cette dernière ne permet pas d'assurer un équilibre statique de la tête du passager souhaitant s'endormir, dans la mesure où le contact entre la tête et la têtière est établi suivant une surface réduite située généralement sur le côté du front du passager.

Le document US2007/273194 (D1) décrit un appui-tête portable muni d'un support en forme de U dimensionné pour être fixé sur le dessus de la chaise. Le support porte une tige télescopique s'étendant vers le bas.

Le document US6250716 (D2) décrit un repose-tête réglable à double ailettes qui offre à la fois soutien et confort à l'utilisateur et qui peut être utilisé pour des sièges de véhicules de tourisme.

Le document FR2883528 (D3) décrit un appuie-tête comportant un bras pivotant et une tige pour relier un appui-tête latéral à un support de nuque. Le bras et la tige permettent de déplacer l'appuie-tête entre une position stockée et une position déployée.

Le document US2012/139309 (D4) décrit des sièges passagers comprenant un support de dossier et une structure de support de nuque comprenant un appui-tête couplé au support de dossier et au moins une aile couplée de manière pivotante à l'appui-tête.

Le document DE8810569 (DE8810569) décrit un siège avec support de nuque relié de manière fixe ou amovible à un dossier.

L'invention vise à remédier efficacement à cet inconvénient en proposant une têtière, notamment pour siège d'aéronef, comportant les caractéristiques de la revendication 1.

L'invention permet ainsi au passager d'ajuster la position de l'ailette pour venir y poser sa joue afin de pouvoir prendre une position d'endormissement confortable. L'invention confère à la têtière une nouvelle fonction de maintien de la tête du passager prenant en compte la variabilité de corpulence des passagers.

Selon l'invention, l'articulation est configurée pour autoriser une rotation de l'ailette par rapport à la partie centrale respectivement autour d'un premier axe et d'un deuxième axe.

Selon une réalisation, le premier axe et le deuxième axe forment un angle non nul l'un par rapport à l'autre.

Selon une réalisation, le premier axe est sensiblement vertical.

Selon une réalisation, le deuxième axe est sensiblement horizontal.

Selon une réalisation, l'articulation comporte une glissière apte à autoriser un mouvement de translation de l'ailette par rapport à la partie centrale. Cela permet d'ajuster la position de la têtière en fonction de la variabilité de la morphologie des passagers et d'assurer ainsi un maximum de surface de contact avec la joue et le menton du passager. On améliore ainsi l'ergonomie de la têtière pour le passager endormi.

Selon l'invention, l'articulation comporte:
- une première charnière apte à autoriser un mouvement rotatif de l'ailette par rapport à la partie centrale autour dudit premier axe, et
- une deuxième charnière apte à autoriser un mouvement rotatif de l'ailette autour du deuxième axe.

Selon une réalisation, les charnières et/ou la glissière sont à friction pour maintenir en position l'ailette après son réglage.

Selon une réalisation, la première charnière comporte un premier étrier fixé sur la partie centrale et un premier bras monté rotatif par rapport au premier étrier.

Selon une réalisation, la deuxième charnière comporte un deuxième étrier solidaire du premier bras de la première charnière et un deuxième bras monté rotatif par rapport au deuxième étrier.

Selon une réalisation, la glissière est portée par le deuxième bras de la deuxième charnière.

Selon une réalisation, ladite têtière comporte un cache fixé sur un bord de l'ailette recouvrant la première charnière et/ou la deuxième charnière.

L'invention a également pour objet un siège destiné à être installé notamment dans une cabine d'aéronef, caractérisé en ce qu'il comporte une têtière telle que précédemment définie.

Selon une réalisation, la siège comprend un dossier et en ce que la têtière comporte un dispositif de montage coulissant par rapport au dossier.

Selon une réalisation, le dispositif de montage coulissant comporte un support muni d'au moins une tige apte à coulisser à l'intérieur d'une ouverture réalisée dans le dossier.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une vue en perspective éclatée d'une têtière de siège selon la présente invention;
- Les figures 2a à 2c sont des vues en perspective illustrant le déploiement de la têtière de siège selon la présente invention;
- La figure 3 est une vue de dos de la partie centrale de la têtière selon la présente invention;
- La figure 4 est une vue en perspective de côté de la têtière selon l'invention montée sur un dossier de siège.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, dans la suite de la description, les termes relatifs de type "vertical" et "horizontal" sont considérés par référence à un siège muni d'une têtière installé dans une cabine d'aéronef, notamment par fixation sur des rails dédiés.

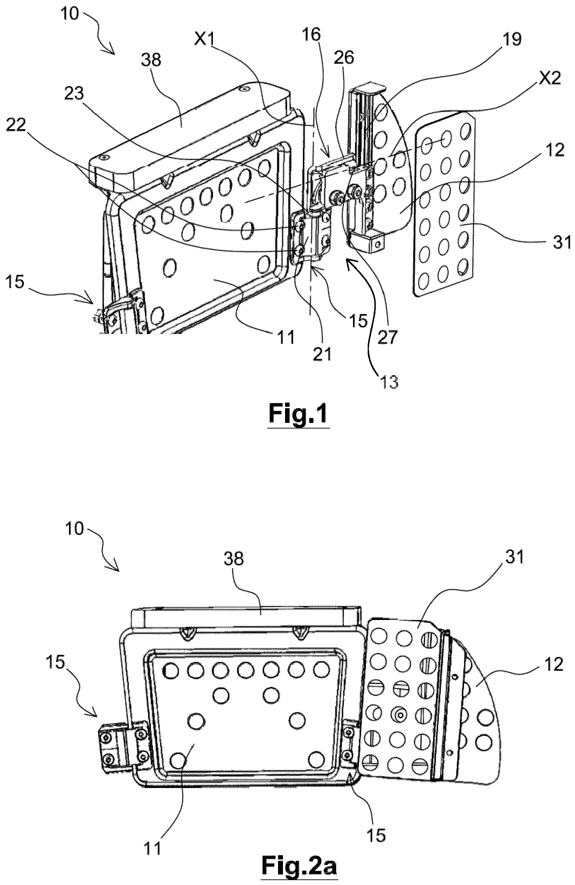

La figure 1 montre une têtière 10 notamment pour un siège d'aéronef comportant une partie centrale 11 et au moins une ailette 12 positionnée à une extrémité de la partie centrale 11. La partie centrale 11 pourra par exemple prendre la forme d'une plaque rectangulaire s'étendant de part et d'autre d'un plan médian du siège. La partie centrale 11 présente une face avant contre laquelle vient en appui la tête du passager.

Afin de faciliter la compréhension des figures, une seule ailette 12 a été représentée. Toutefois, en pratique, une première ailette 12 est positionnée à une extrémité de la partie centrale 11; et une deuxième ailette 12 est positionnée à l'autre extrémité de la partie centrale 11. Les ailettes 12 sont ainsi positionnées de part et d'autre de la partie centrale 11. Chaque ailette 12 pourra par exemple prendre la forme d'une plaque ayant une section transversale qui augmente lorsque l'on se déplace de l'extrémité supérieure vers l'extrémité inférieure.

L'ailette 12 est accolée à la partie centrale, c'est-à-dire que l'ailette 12 est reliée mécaniquement à la partie centrale 11 sans autre ailette intermédiaire interposée entre l'ailette 12 et la partie centrale 11.

Une articulation 13 est interposée entre l'ailette 12 et la partie centrale 11. L'articulation 13 est configurée pour autoriser au moins deux mouvements de l'ailette 12 par rapport à la partie centrale 11 selon au moins un axe. Autrement dit, l'articulation 13 est au moins bidirectionnelle. Les mouvements sont choisis parmi un mouvement de rotation.

Selon l'invention, l'articulation 13 est configurée pour autoriser au moins une première rotation de l'ailette 12 par rapport à la partie centrale 11 autour d'un axe X1 et une deuxième rotation de l'ailette 12 par rapport à la partie centrale 11 autour d'un axe X2. Ces deux axes X1, X2 forment avantageusement un angle non nuls l'un par rapport à l'autre.

A cet effet, l'articulation 13 comporte par exemple une première charnière 15 et une deuxième charnière 16 reliées mécaniquement entre elles. Ces charnières 15, 16 sont situées dans la même zone d'interfaçage entre l'ailette latérale 12 et la partie centrale 11.

Suivant un exemple particulier, la première charnière 15 est apte à autoriser un mouvement rotatif de l'ailette 12 par rapport à la partie centrale 11 autour du premier axe X1. De préférence, le premier axe X1 est sensiblement vertical. Par "sensiblement vertical", on entend un axe formant un angle inférieur à 30 degrés par rapport à la direction verticale.

En outre, une deuxième charnière 16 est apte à autoriser un mouvement rotatif de l'ailette 12 autour du deuxième axe X2. De préférence, le deuxième axe X2 est sensiblement horizontal. Par "sensiblement horizontal", on entend un axe formant un angle inférieur à 30 degrés par rapport à la direction horizontale.

Dans l'exemple de réalisation, les axes X1 et X2 forment entre eux un angle de l'ordre de 90 degrés. Toutefois, en variante, l'angle entre ces deux axes X1 et X2 pourra être adapté en fonction de l'application. Dans tous les cas, l'angle entre ces deux axes X1 et X2 est non nul.

L'articulation 13 comporte en outre une glissière 19 apte à autoriser un mouvement de translation de l'ailette 12 par rapport à la partie centrale 11. Avantageusement, les charnières 15, 16 et la glissière 19 sont à friction pour maintenir en position l'ailette 12 après son réglage en rotation et en translation par rapport à la partie centrale 11.

Plus précisément, la première charnière 15 comporte un premier étrier 21 fixé sur la partie centrale 11 au moyen d'organes de fixation 22, tels que des vis, et un premier bras 23 monté rotatif par rapport au premier étrier 21. A cet effet, le premier bras 23 pénètre dans une ouverture d'axe X1 correspondante prévue dans l'étrier 21.

La deuxième charnière 16 comporte un deuxième étrier 26 solidaire du premier bras 23 de la charnière 15 et un deuxième bras 27 monté rotatif par rapport au deuxième étrier 26.

La glissière 19 sur laquelle est fixée l'ailette 12 est portée par le deuxième bras 27 de la deuxième charnière 16. La glissière 19 autorise un mouvement en translation de l'ailette 12 par rapport au deuxième bras 27.

En outre, un cache 31 fixé sur un bord de l'ailette 12 recouvre les première et deuxième charnières 15, 16.

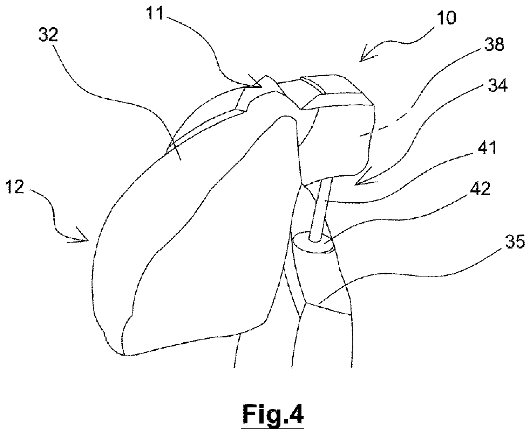

Les différents éléments de la têtière 10 (partie centrale, ailettes, et caches) étant réalisés à partir de plaques de métal, notamment trouées, ces éléments sont de préférence recouverts d'un matériau 32 de type mousse et de tissu pour améliorer le confort du passager, comme cela est illustré par la figure 4.

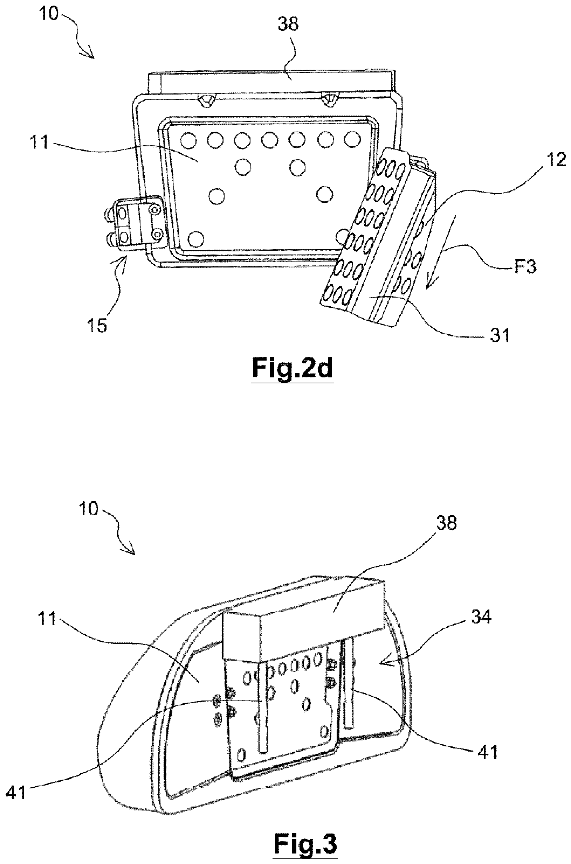

Afin d'ajuster la hauteur de la têtière 10, cette dernière comporte un dispositif de montage coulissant 34 par rapport au dossier 35, tel que montré sur les figures 3 et 4. Ce dispositif 34 comporte un support 38 qui pourra par exemple s'étendre le long d'un bord longitudinal supérieur de la partie centrale 11. Ce support 38 est muni de deux tiges 41 s'étendant du côté de la face arrière de la partie centrale 11. Ces tiges 41 sont aptes à coulisser à l'intérieur d'ouvertures 42 de forme correspondante réalisées dans le dossier 35. En variante, le support 38 pourra comporter une seule ou plus de deux tiges 41.

On décrit ci-après en référence avec les figures 2a à 2d, le déploiement des ailettes 12 de la têtière 10 selon l'invention qui se trouve sensiblement dans le plan d'extension de la partie centrale 11 dans une position de repos.

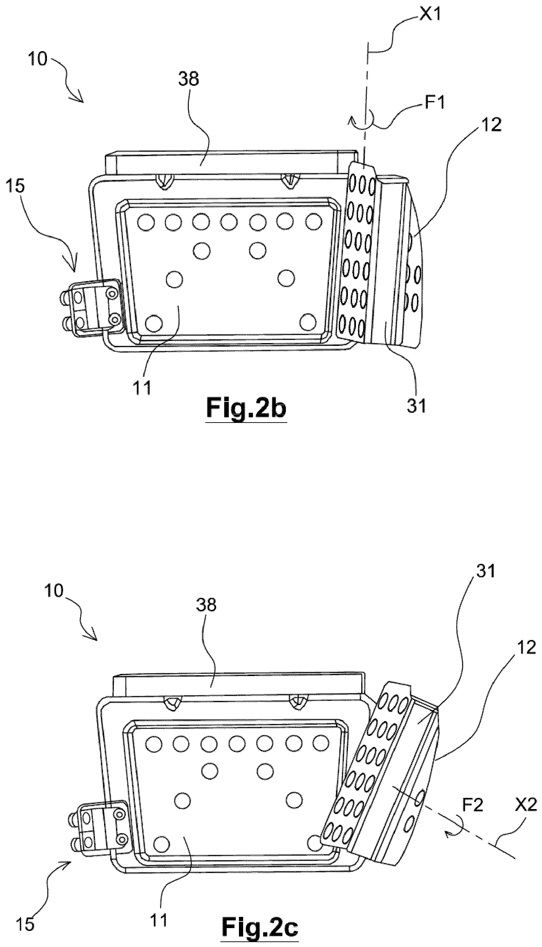

Dans un premier temps, le passager pourra faire tourner, suivant la flèche F1, l'ailette 12 autour de l'axe X1 sensiblement vertical via la première charnière 15, tel que cela est montré sur la figure 2b. L'ailette 12 est ainsi positionnée suivant une direction transversale d'appui. La rotation de la têtière 10 autour de l'axe X1 est limitée par exemple à un angle de l'ordre de 60 degrés.

Le passager peut ensuite faire tourner, suivant la flèche F2, l'ailette 12 autour de l'axe X2 sensiblement horizontal via la deuxième charnière 16, comme cela est illustré par la figure 2c. Un tel déplacement permet d'assurer un alignement de l'ailette 12 avec la joue du passager. La rotation de la têtière 10 autour de l'axe X2 est limitée par exemple à un angle de l'ordre de 20 degrés.

L'ailette 12 peut ensuite être déplacée, via la glissière 19, suivant un mouvement de translation rectiligne par rapport à la partie centrale 11 suivant la flèche F3, tel que cela est illustré par la figure 2d. La course maximale en translation de la glissière 19 pourra par exemple être de l'ordre de 5cm. Un tel déplacement linéaire en translation permet d'ajuster la têtière 10 à la variabilité de la morphologie des passagers, en particulier la position de la tête, et d'assurer ainsi un maximum de surface de contact avec la joue et le menton.

Alternativement, l'articulation 13 comporte un mécanisme à rotule à friction et/ou débrayable qui est interposé entre chaque ailette 12 et la partie centrale 11. Il sera également possible d'utiliser une rotule à doigt. Cela constitue des variantes à l'utilisation des charnières 15, 16. En variante, la glissière 19 n'est pas linaire.

Si la présente invention est particulièrement bien adaptée à un siège d'avion de classe économique dans lequel la mobilité du dossier par rapport à l'assise est limitée, voire nulle, l'invention pourra également être mise en œuvre avec des sièges de classe supérieure.

Ces sièges pourront le cas échéant être motorisés et prendre au moins une position assise et une position allongée par déplacement respectifs de l'assise, du dossier et/ou d'un repose-jambes. Le siège pourra de préférence également prendre au moins une position intermédiaire, dite position de détente, entre la position assise et la position allongée.

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, sinon s'écartant ainsi de sa portée telle que définie par les revendications annexées.

## Revendications

1. Têtière (10), notamment pour siège d'aéronef, comportant:
- une partie centrale (11), et
- au moins une ailette (12) positionnée à une extrémité de la partie centrale (11), ladite ailette (12) étant accolée à la partie centrale (11) de sorte que l'ailette (12) est reliée mécaniquement à la partie centrale (11) sans autre ailette intermédiaire interposée entre l'ailette (12) et la partie centrale (11), ladite ailette (12) se situant dans un plan d'extension de la partie centrale (11) en position repos, ladite têtière (10) comprenant au moins une articulation (13) interposée entre l'ailette (12) et la partie centrale (11), l'articulation (13) étant configurée pour autoriser au moins deux mouvements relatifs de l'ailette (12) par rapport à la partie centrale (11) selon au moins un axe (X1, X2),
- l'articulation (13) étant configurée pour autoriser une rotation de l'ailette (12) par rapport à la partie centrale (11) respectivement autour d'un premier axe (X1) et/ou d'un deuxième axe (X2), ladite articulation (13) étant une articulation au moins bidirectionnelle comportant une première charnière (15) apte à autoriser un mouvement rotatif de l'ailette (12) par rapport à la partie centrale (11) autour dudit premier axe (X1), et une deuxième charnière (16) apte à autoriser un mouvement rotatif de l'ailette (12) autour du deuxième axe (X2),
- ladite première charnière (15) et ladite deuxième charnière (16) étant reliées mécaniquement entre elles, de telle que façon que l'ailette (12) se trouvant sensiblement dans le plan d'extension de la partie centrale (11) dans une position de repos, un passager peut faire tourner dans un premier temps l'ailette (12) autour du premier axe (X1) via la première charnière (15) et ensuite faire tourner l'ailette (12) autour du deuxième axe (X2) via la deuxième charnière (16).

2. Têtière (10) selon la revendication 1, **caractérisée en ce que** le premier axe (X1) et le deuxième axe (X2) forment un angle non nul l'un par rapport à l'autre.

3. Têtière (10) selon la revendication 1 ou 2, **caractérisée en ce que** le premier axe (X1) est sensiblement vertical.

4. Têtière (10) selon l'une quelconque des revendications 1 à 3, **caractérisée en ce que** le deuxième axe (X2) est sensiblement horizontal.

5. Têtière (10) selon l'une quelconque des revendications précédentes, **caractérisée en ce que** l'articulation (13) comporte une glissière (19) apte à autoriser un mouvement de translation de l'ailette (12) par rapport à la partie centrale (11).

6. Têtière selon la revendication 5, **caractérisée en ce que** les charnières (15, 16) et/ou la glissière (19) sont à friction pour maintenir en position l'ailette (12) après son réglage.

7. Têtière selon la revendication 1, **caractérisée en ce que** la première charnière (15) comporte un premier étrier (21) fixé sur la partie centrale (11) et un premier bras (23) monté rotatif par rapport au premier étrier (21).

8. Têtière (10) selon la revendication 7, **caractérisée en ce que** la deuxième charnière (16) comporte un deuxième étrier (26) solidaire du premier bras (23) de la première charnière (15) et un deuxième bras (27) monté rotatif par rapport au deuxième étrier (26).

9. Têtière (10) selon les revendications 5 et 8, **caractérisée en ce que** la glissière (19) est portée par le deuxième bras (27) de la deuxième charnière (16).

10. Têtière (10) selon l'une quelconque des revendications 1 à 9, **caractérisée en ce qu'**elle comporte un cache (31) fixé sur un bord de l'ailette (12) recouvrant la première charnière (15) et/ou la deuxième charnière (16).

11. Siège destiné à être installé notamment dans une cabine d'aéronef, **caractérisé en ce qu'**il comporte une têtière (10) selon l'une quelconque des revendications précédentes.

12. Siège selon la revendication 11, **caractérisé en ce que** la siège comprend un dossier (35) et **en ce que** la têtière (10) comporte un dispositif de montage coulissant (34) par rapport au dossier (35).

13. Siège selon la revendication 12, **caractérisée en ce que** le dispositif de montage coulissant (34) comporte un support (38) muni d'au moins une tige (41) apte à coulisser à l'intérieur d'une ouverture (42) réalisée dans le dossier (35).

## Patentansprüche

1. Kopfstütze (10), insbesondere für einen Flugzeugsitz, umfassend:
- ein Mittelteil (11), und
- mindestens eine Rippe (12), die an einem Ende des Mittelteils (11) positioniert ist, wobei die Rippe (12) an das Mittelteil (11) angrenzt, so dass die Rippe (12) mechanisch mit dem Mittelteil (11) ohne eine andere Zwischenrippe zwischen der Rippe (12) und dem Mittelteil (11) verbunden ist, wobei sich die Rippe (12) in der Ruheposition in einer Erstreckungsebene des Mittelteils (11) befindet, wobei die Kopfstütze (10) mindestens ein Gelenk (13) umfasst, das zwischen der Rippe (12) und dem Mittelteil (11) angeordnet ist, wobei das Gelenk (13) dazu konfiguriert ist, mindestens zwei Relativbewegungen der Rippe (12) relativ zum Mittelteil (11) entlang mindestens einer Achse (X1, X2) zu ermöglichen,
- wobei das Gelenk (13) dazu konfiguriert ist, eine Drehung der Rippe (12) relativ zum Mittelteil (11) jeweils um eine erste Achse (X1) und/oder eine zweite Achse (X2) zu ermöglichen,
- wobei das Gelenk (13) ein zumindest bidirektionales Gelenk ist, das ein erstes Scharnier (15), das eine Drehbewegung der Rippe (12) relativ zum Mittelteil (11) um die erste Achse (X1) ermöglichen kann, und ein zweites Scharnier (16), das eine Drehbewegung der Rippe (12) um die zweite Achse (X2) ermöglichen kann, umfasst,
- wobei das erste Scharnier (15) und das zweite Scharnier (16) mechanisch miteinander verbunden sind, so dass, wenn sich die im Wesentlichen in der Erstreckungsebene des Mittelteils (11) befindliche Rippe (12) in einer Ruheposition ist, ein Passagier zuerst die Rippe (12) um die erste Achse (X1) über das erste Scharnier (15) und dann die Rippe (12) um die zweite Achse (X2) über das zweite Scharnier (16) drehen kann.

2. Kopfstütze (10) nach Anspruch 1, **dadurch gekennzeichnet, dass** die erste Achse (X1) und die zweite Achse (X2) einen von Null verschiedenen Winkel zueinander bilden.

3. Kopfstütze (10) nach Anspruch 1 oder 2, **dadurch gekennzeichnet, dass** die erste Achse (X1) im Wesentlichen vertikal verläuft.

4. Kopfstütze (10) nach einem der Ansprüche 1 bis 3, **dadurch gekennzeichnet, dass** die zweite Achse (X2) im Wesentlichen horizontal verläuft.

5. Kopfstütze (10) nach einem der vorhergehenden Ansprüche, **dadurch gekennzeichnet, dass** das Gelenk (13) einen Schieber (19) umfasst, der eine translatorische Bewegung der Rippe (12) relativ zum Mittelteil (11) ermöglichen kann.

6. Kopfstütze nach Anspruch 5, **dadurch gekennzeichnet, dass** die Scharniere (15, 16) und/oder der Schieber (19) Reibungselemente sind, um die Rippe (12) nach deren Einstellung in Position zu halten.

7. Kopfstütze nach Anspruch 1, **dadurch gekennzeichnet, dass** das erste Scharnier (15) einen am Mittelteil (11) befestigten ersten Bügel (21) und einen relativ zum ersten Bügel (21) drehbar gelagerten ersten Arm (23) umfasst.

8. Kopfstütze (10) nach Anspruch 7, **dadurch gekennzeichnet, dass** das zweite Scharnier (16) einen zweiten, mit dem ersten Arm (23) des ersten Scharniers (15) einstückigen Bügel (26) und einen zweiten, relativ zur zweiten Halterung (26) drehbar montierten Arm (27) umfasst.

9. Kopfstütze (10) nach den Ansprüchen 5 und 8, **dadurch gekennzeichnet, dass** der Schieber (19) vom zweiten Arm (27) des zweiten Scharniers (16) getragen wird.

10. Kopfstütze (10) nach einem der Ansprüche 1 bis 9, **dadurch gekennzeichnet, dass** sie ein Abdeckelement (31) umfasst, das an einer Kante der Rippe (12) befestigt ist und erste Scharnier (15) und/oder das zweite Scharnier (16) abdeckt.

11. Sitz zum Einbau insbesondere in eine Flugzeugkabine, **dadurch gekennzeichnet, dass** er eine Kopfstütze (10) nach einem der vorhergehenden Ansprüche umfasst.

12. Sitz nach Anspruch 11, **dadurch gekennzeichnet, dass** der Sitz eine Rückenlehne (35) umfasst, und dass die Kopfstütze (10) eine relativ zur Rückenlehne (35) verschiebbare Befestigungsvorrichtung (34) umfasst.

13. Sitz nach Anspruch 12, **dadurch gekennzeichnet, dass** die verschiebbare Befestigungsvorrichtung (34) einen Träger (38) umfasst, der mit mindestens einer Stange (41) versehen ist, die in einer Öffnung (42) in der Rückenlehne (35) gleiten kann.

## Claims

1. A headrest (10), in particular for an aircraft seat, comprising:
- a central part (11), and
- at least one fin (12) positioned at one end of the central part (11), said fin (12) being contiguous to the central part (11) so that the fin (12) is mechanically connected to the central part (11) without any other intermediate fin interposed between the fin (12) and the central part (11), said fin (12) being located in an extension plane of the central part (11) in a rest position, said headrest (10) comprising at least one articulation (13) interposed between the fin (12) and the central part (11), the articulation (13) being configured to allow at least two relative movements of the fin (12) relative to the central part (11) along at least one axis (X1, X2),
- the articulation (13) being configured to allow a rotation of the fin (12) relative to the central part (11) respectively around a first axis (X1) and/or a second axis (X2),
- said articulation (13) being an at least bidirectional articulation comprising a first hinge (15) capable of allowing a rotary movement of the fin (12) relative to the central part (11) around said first axis (X1), and a second hinge (16) capable of allowing a rotary movement of the fin (12) around the second axis (X2),
- said first hinge (15) and said second hinge (16) being mechanically connected to one another, such that, when the fin (12) located substantially in the plane of extension of the central part (11) is in a rest position, a passenger can first rotate the fin (12) around the first axis (X1) via the first hinge (15) and then rotate the fin (12) around the second axis (X2) via the second hinge (16).

2. The headrest (10) according to claim 1, **characterized in that** the first axis (X1) and the second axis (X2) form a non-zero angle with respect to one another.

3. The headrest (10) according to claim 1 or 2, **characterized in that** the first axis (X1) is substantially vertical.

4. The headrest (10) according to any one of the claims 1 to 3, **characterized in that** the second axis (X2) is substantially horizontal.

5. The headrest (10) according to any one of the preceding claims, **characterized in that** the articulation (13) comprises a slide (19) able to allow a translational movement of the fin (12) relative to the central part (11).

6. The headrest according to claim 5, **characterized in that** the hinges (15, 16) and/or the slide (19) are friction elements in order to maintain the fin (12) in position after the adjustment thereof.

7. The headrest according to claim 1, **characterized in that** the first hinge (15) comprises a first bracket (21) fixed to the central part (11) and a first arm (23) rotatably mounted relative to the first bracket (21).

8. The headrest (10) according to claim 7, **characterized in that** the second hinge (16) comprises a second bracket (26) integral with the first arm (23) of the first hinge (15) and a second arm (27) rotatably mounted relative to the second bracket (26).

9. The headrest (10) according to claims 5 and 8, **characterized in that** the slide (19) is carried by the second arm (27) of the second hinge (16).

10. The headrest (10) according to any one of the claims 1 to 9, **characterized in that** it comprises a cover (31) fixed to an edge of the fin (12) covering the first hinge (15) and/or the second hinge (16).

11. Seat intended to be notably installed in an aircraft cabin, **characterized in that** it comprises a headrest (10) according to any one of the preceding claims.

12. Seat according to claim 11, **characterized in that** the seat comprises a backrest (35) and **in that** the headrest (10) comprises a sliding mounting device (34) relative to the backrest (35).

13. Seat according to claim 12, **characterized in that** the sliding mounting device (34) comprises a support (38) provided with at least one rod (41) able of sliding inside an opening (42) in the backrest (35).
